# EUROPEAN PATENT SPECIFICATION

(11) **EP 4 231 437 B1**
(45) Date of publication and mention of the grant of the patent: **29.04.2026**
(21) Application number: 21939989.6
(22) Date of filing: 29.12.2021
(51) Int. Cl.: H01M 50/195, H01M 50/597, H01M 50/184, H01M 50/186, H01M 4/13, H01M 4/139, H01M 10/052, H01M 10/058, H01M 10/42, H01M 4/02

(54) **POSITIVE ELECTRODE PLATE, SECONDARY BATTERY, BATTERY MODULE, BATTERY PACK AND ELECTRIC DEVICE**
POSITIVELEKTRODENPLATTE, SEKUNDÄRBATTERIE, BATTERIEMODUL, BATTERIEPACK UND ELEKTRISCHE VORRICHTUNG
PLAQUE D'ÉLECTRODE POSITIVE, BATTERIE SECONDAIRE, MODULE DE BATTERIE, BLOC-BATTERIE ET DISPOSITIF ÉLECTRIQUE

(43) Date of publication of application: 23.08.2023
(73) Proprietor: Contemporary Amperex Technology (Hong Kong) Limited, Central, Central And Western District (HK)
(72) Inventor: AI, Shaohua, Ningde City, Fujian 352100 (CN); ZHENG, Yi, Ningde City, Fujian 352100 (CN); SUN, Chengdong, Ningde City, Fujian 352100 (CN)
(74) Representative: Lorenz Seidler Gossel Part. mbB
(86) International application number: PCT/CN2021/142341
(87) International publication number: WO 2023/123013

(56) References cited:
- CN-A- 104 185 651
- CN-A- 112 106 223
- CN-A- 112 864 546
- JP-A- 2020 202 039
- KR-A- 20200 064 752
- US-A1- 2018 083 248
- US-A1- 2021 036 332
- US-A1- 2021 159 505

## Description

### TECHNICAL FIELD

This application pertains to the field of battery technologies, and specifically, to a positive electrode plate, a secondary battery, a battery module, a battery pack, and an electric apparatus.

### BACKGROUND

In recent years, secondary batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace. With application and popularization of secondary batteries, their safety has attracted increasing attention. If the safety of a secondary battery cannot be guaranteed, the secondary battery cannot be used. Therefore, how to enhance safety performance of secondary batteries is a technical problem that needs to be urgently resolved.

Document US 2018 / 083 248 A1 discloses a battery separator including a coating layer manufactured from a slurry including polyvinylidenfluorid as a binder. Furthermore, insulating slurries comprising polyfluorinated olefin resins and a flake-like inorganic filler is known from CN 11 2106 223 A and CN 10 418 5651 A.

### SUMMARY

This application aims to provide a positive electrode plate, a secondary battery, a battery module, a battery pack, and an electric apparatus to improve both a coating velocity of the insulating slurry and safety performance of the secondary battery.

More particularly, the suggested positive electrode plate comprises an insulating coating layer formed by drying an insulating slurry, including resin, an inorganic filler, and an organic solvent, where the resin is selected from polyfluorinated olefin resin prepared by using a suspension polymerization method, and the inorganic filler is selected from two-dimensional inorganic materials.

In the technical solution of the insulating slurry in this application, polyfluorinated olefin resin prepared by using the suspension polymerization method is combined with the two-dimensional inorganic material for use, which can limit a migration of the insulating slurry to a coating region of a positive electrode slurry and further reduce a fuzzy width of a fusion region significantly while improving a coating velocity, thereby improving safety performance of the secondary battery. The technical solution of the insulating slurry in this application can also ensure that the secondary battery has high energy density. The insulating coating prepared from the insulating slurry in this application can have high mechanical strength, high heat resistance, high insulation, high adhesion, and excellent electrolyte resistance. Even when the negative electrode active material layer comes into contact with the positive electrode plate because the separator is pierced by a foreign matter, a burr, or the like, the negative electrode active material layer does not come in direct contact with the positive electrode current collector, thereby ensuring high safety performance of the secondary battery.

In any embodiment of this application, based on a total mass of the insulating slurry, a mass percentage w1 of the resin is 1%-5%, a mass percentage w2 of the inorganic filler is 5%-35%, and a mass percentage w3 of the organic solvent is 60%-94%. The mass percentages of the resin, the inorganic filler, and the organic solvent are properly adjusted, which can reduce the fuzzy width of the fusion region effectively while increasing the coating velocity significantly. In addition, the obtained insulating coating has high mechanical strength, high heat resistance, high insulation, high adhesion, and excellent electrolyte resistance, and the secondary battery using the insulating coating can have both good electrochemical performance and higher safety performance.

In any embodiment of this application, w1/w2 is 0.05-1. Optionally, w1/w2 is 0.1-1. That w1/w2 is in a proper range can reduce the fuzzy width of the fusion region effectively and also ensure that the insulating coating has high mechanical strength, high heat resistance, high insulation, high adhesion, and excellent electrolyte resistance.

In any embodiment of this application, viscosity of the insulating slurry at 25°C is 1000-20000 cps. Optionally, the viscosity of the insulating slurry at 25°C is 3000-8000 cps.

In any embodiment of this application, a number-average molecular weight of the polyfluorinated olefin resin is 600000-1500000. Optionally, the number-average molecular weight of the polyfluorinated olefin resin is 1100000-1300000.

In any embodiment of this application, crystallinity of the polyfluorinated olefin resin is 30%-60%. Optionally, the crystallinity of the polyfluorinated olefin resin is 40%-50%.

In any embodiment of this application, a melting point of the polyfluorinated olefin resin is 150-180°C. Optionally, the melting point of the polyfluorinated olefin resin is 155-175°C.

In any embodiment of this application, the polyfluorinated olefin resin is selected from at least one of polyvinylidene fluoride resin, polyvinyl fluoride resin, polytetrafluoroethylene resin, vinylidene fluoride-hexafluoropropylene copolymer resin, vinylidene fluoride-trifluoroethylene copolymer resin, vinylidene fluoride-chlorotrifluoroethylene copolymer resin, vinylidene fluoride-tetrafluoroethylene copolymer resin, and vinylidene fluoride-tetrafluoroethylene-hexafluoropropylene copolymer resin.

In any embodiment of this application, the two-dimensional inorganic material has layered, flake-like, or thin plate-like morphology.

In any embodiment of this application, the two-dimensional inorganic material is selected from at least one of layered silicate and a two-dimensional molecular sieve. The morphology of the layered silicate and the two-dimensional molecular sieve is layered, flake-like, or thin plate-like, and therefore, when the insulating slurry migrates to the coating region of the positive electrode slurry, the migration velocity can be reduced, thereby further reducing the fuzzy width of the fusion region. The layered silicate and the two-dimensional molecular sieve also have a stronger adsorption capacity and can be combined with the resin in the insulating slurry by van der Waals force, thereby further reducing the migration velocity of the insulating slurry and the fuzzy width of the fusion region.

In any embodiment of this application, the layered silicate includes at least one of mica powder, fluorophlogopite powder, talc powder, hydrotalcite, and a hydrotalcite-like compound.

In any embodiment of this application, the two-dimensional molecular sieve includes at least one of an MWW-type, an SAPO-type, an FER-type, and a PLS-n-type molecular sieve.

In any embodiment of this application, a median particle size by volume Dᵥ50 of the two-dimensional inorganic material is 0.5-10 µm. Optionally, the median particle size by volume Dᵥ50 of the two-dimensional inorganic material is 0.5-5 µm.

In any embodiment of this application, a diameter-thickness ratio of the two-dimensional inorganic material is greater than or equal to 50:1. Optionally, the diameter-thickness ratio of the two-dimensional inorganic material is 50:1-100:1.

In any embodiment of this application, the organic solvent includes at least one of N-methylpyrrolidone, triethyl phosphate, dimethyl sulfoxide, N,N-dimethylformamide, and N,N-dimethylacetamide.

In any embodiment of this application, a mass percentage of an emulsifier in the insulating slurry is less than or equal to 1/1000000. Optionally, the mass percentage of the emulsifier in the insulating slurry is 0%.

Preparation of insulating slurry may include the following steps: S100. Disperse an organic solvent and an inorganic filler uniformly to obtain a first slurry. S200. Add resin particles to the obtained first slurry in a dispersed state and obtain the insulating slurry after uniform dispersion. The inorganic filler is selected from at least one two-dimensional inorganic material, and the resin particles are selected from at least one polyfluorinated olefin resin prepared by using a suspension polymerization method.

Preferably, based on a total mass of the insulating slurry, a mass percentage of the resin particles is 1%-5%, a mass percentage of the inorganic filler is 5%-35%, and a mass percentage of the organic solvent is 60%-94%.

Preferably, in step S100, a dispersion linear velocity is 20-100 m/s, and dispersion time is 15-120 min.

Preferably, in step S200, a dispersion linear velocity is 20-100 m/s, and dispersion time is 120-480 min.

Preferably, the method further includes: S300. Filter the obtained insulating slurry. Optionally, the obtained insulating slurry is filtered by using a 100-200 mesh filter screen.

Preferably, the resin particles are primary particles. A median particle size by volume Dᵥ50 of the primary particles is 20-150 µm. Optionally, the median particle size by volume Dᵥ50 of the primary particles is 50-100 µm.

As mentioned, this application provides a positive electrode plate, including a positive electrode current collector, a positive electrode active material layer, and an insulating coating, where the positive electrode active material layer is located on at least part of a surface of the positive electrode current collector; and the insulating coating is located on the surface of the positive electrode current collector and abuts an edge of the positive electrode active material layer along a length direction of the positive electrode current collector, where the insulating coating is a layer formed by drying the insulating slurry as defined in claim 1.

In any embodiment of this application, a thickness of the insulating coating is 2-150 µm.

In any embodiment of this application, a width of the insulating coating is 0.1-15 mm.

Another aspect of this application provides a secondary battery, including the positive electrode plate in the third aspect of this application.

A further aspect of this application provides a battery module, including the secondary battery in the fourth aspect of this application.

A still further aspect of this application provides a battery pack, including one of the secondary battery according to the fourth aspect and the battery module according to the fifth aspect of this application.

A still further aspect of this application provides an electric apparatus, including at least one of the secondary battery according to the fourth aspect, the battery module according to the fifth aspect, and the battery pack according to the sixth aspect of this application.

### [Beneficial effects]

In the insulating slurry in this application, the polyfluorinated olefin resin prepared by using the suspension polymerization method is combined with the two-dimensional inorganic material for use, which can limit the migration of the insulating slurry to the coating region of the positive electrode slurry and further reduce the fuzzy width of the fusion region significantly while improving a coating velocity, thereby improving safety performance of the secondary battery. The insulating slurry in this application can also ensure that the secondary battery has high energy density. The insulating coating prepared from the insulating slurry in this application can have high mechanical strength, high heat resistance, high insulation, high adhesion, and excellent electrolyte resistance. Even when the negative electrode active material layer comes into contact with the positive electrode plate because the separator is pierced by a foreign matter, a burr, or the like, the negative electrode active material layer does not come in direct contact with the positive electrode current collector, thereby ensuring high safety performance of the secondary battery. The battery module, the battery pack, and the electric apparatus in this application include the secondary battery provided in this application, and therefore have at least the same advantages as the secondary battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and a person of ordinary skills in the art may still derive other drawings from the accompanying drawings without creative efforts.
FIG. 1 is a schematic diagram of an embodiment of a positive electrode plate according to this application.
FIG. 2 is a schematic diagram of an embodiment of a secondary battery according to this application.
FIG. 3 is an exploded view of an embodiment of the secondary battery in FIG. 2.
FIG. 4 is a schematic diagram of an embodiment of a battery module according to this application.
FIG. 5 is a schematic diagram of an embodiment of a battery pack according to this application.
FIG. 6 is an exploded view of an embodiment of the battery pack shown in FIG. 5.
FIG. 7 is a schematic diagram of an embodiment of an electric apparatus using a secondary battery according to this application as a power source.
FIG. 8 is a diagram of a comparison between results of applying, at a high velocity, insulating slurries prepared in Example 1 and Comparative Example 1.

In the accompanying drawings, the figures are not necessarily drawn to scale.

### DESCRIPTION OF EMBODIMENTS

The following specifically discloses an insulating slurry and a preparation method thereof, embodiments of a positive electrode plate, a secondary battery, a battery module, a battery pack, and an electric apparatus in this application with appropriate reference to accompanying drawings. However, unnecessary detailed descriptions may be omitted. For example, detailed descriptions of a well-known matter or overlapping descriptions of an actual identical structure have been omitted. This is to avoid unnecessary cumbersomeness of the following descriptions to facilitate understanding by a person skilled in the art. In addition, the accompanying drawings and the following descriptions are provided for a person skilled in the art to fully understand this application, but are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combination may be used, that is, any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, when a parameter is expressed as an integer greater than or equal to 2, this is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined to form a new technical solution. In addition, such technical solution should be considered to be included in content disclosed in this application.

Unless otherwise specified, all the technical features and optional technical features in this application can be combined to form a new technical solution. In addition, such technical solution should be considered to be included in content disclosed in this application.

Unless otherwise specified, all the steps in this application can be performed sequentially or randomly, or preferably, is performed sequentially. For example, a method includes steps (a) and (b), which indicates that the method may include steps (a) and (b) performed in sequence, or may include steps (b) and (a) performed in sequence. For example, the foregoing method may further include step (c), which indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components may be included or contained.

Unless otherwise specified, in this application, the term "or" is inclusive. For example, the phrase "A or B" means "A, B, or both A and B". More specifically, any one of the following conditions satisfies the condition "A or B": Ais true (or present) and B is false (or not present); A is false (or not present) and B is true (or present); or both A and B are true (or present).

In this application, the term "two-dimensional inorganic material" refers to an inorganic material whose morphology is two-dimensional or almost two-dimensional. For example, such inorganic material has layered, flake-like, or thin plate-like morphology.

The secondary battery, also referred to as a rechargeable battery or a storage battery, is a battery whose active material can be activated for continuous use through charging after the battery is discharged. Generally, the secondary battery includes an electrode assembly and an electrolyte. The electrode assembly includes a positive electrode plate, a negative electrode plate, and a separator. The positive electrode plate includes a positive electrode current collector and a positive electrode active material layer, the positive electrode active material layer is applied on a surface of the positive electrode current collector, and the positive electrode active material layer includes a positive electrode active material. The negative electrode plate includes a negative electrode current collector and a negative electrode active material layer, the negative electrode active material layer is applied on a surface of the negative electrode current collector, and the negative electrode active material layer includes a negative electrode active material. During a charging and discharging process of the battery, active ions are intercalated and deintercalated between the positive electrode plate and the negative electrode plate. The separator is sandwiched between the positive electrode plate and the negative electrode plate to mainly prevent a short circuit of the positive electrode and the negative electrode and to allow the active ions to pass through. The electrolyte conducts active ions between the positive electrode plate and the negative electrode plate.

Safety is an important factor restricting application and promotion of the secondary battery. An internal short circuit is a main reason that affects the safety of the secondary battery and even causes the secondary battery to fail. There are four main types of short circuits in the secondary battery: (1) a short circuit between the negative electrode current collector and the positive electrode current collector; (2) a short circuit between the negative electrode active material layer and the positive electrode active material layer; (3) a short circuit between the negative electrode active material layer and the positive electrode current collector; and (4) a short circuit between the positive electrode active material layer and the negative electrode current collector. Most studies reveal that the short circuit between the negative electrode active material layer and the positive electrode current collector is the most dangerous. This is mainly because the negative electrode active material layer is a good conductor of electrons, a short circuit point has lower impedance, a voltage drops sharply after the short circuit, and temperature at the short circuit point rises sharply, which can eventually cause a fire or even an explosion.

To improve safety performance of the secondary battery, a commonly used policy is to insulate a region of the surface of the positive electrode current collector that is immediately adjacent to the positive electrode active material layer, for example, to apply an insulating coating. However, during a drying process of the positive electrode plate, an existing insulating slurry migrates to a coating region of a positive electrode slurry, so that a fusion region (commonly known as a pseudo edge, that is, a migration width of an insulating coating to a positive electrode active material layer) is formed on a boundary between the positive electrode active material layer and the insulating coating after drying. A fuzzy width of the fusion region is actually a distance of migrating to the coating region of the positive electrode slurry by the insulating slurry, or a width of a region of the positive electrode active material layer that is covered by the insulating coating. Presence of the fusion region causes a positioning difficulty for a visual inspection device of a CCD (Charge-Coupled Device) during a laser die-cutting process, an inaccurate die-cutting size of the positive electrode plate, and even an overhang that endangers the secondary battery, thereby causing serious safety hazards for the secondary battery. In addition, the fusion region is actually a region formed through mutual fusion of an insulating coating component and a positive electrode active material layer component, or is a region of the positive electrode active material layer, that is covered by the insulating coating, and therefore, ion conductivity of the fusion region is usually poorer, thereby blocking or hindering intercalation and deintercalation of some active ions. Therefore, the presence of the fusion region also decreases energy density of the secondary battery. In addition, a wider fusion region leads to a more significant decrease in the energy density of the secondary battery. In addition, a greater coating velocity leads to a wider fusion region. Even at a high coating velocity, for example, when the coating velocity is greater than 30 m/min, the fuzzy width of the fusion region may exceed 3 mm. This is mainly because the greater coating velocity leads to higher corresponding drying temperature, and the insulating slurry has better fluidity and lower surface tension at high temperature, thereby facilitating migration to the coating region of the positive electrode slurry.

With application and promotion of the secondary battery, a requirement on the coating velocity is increasingly higher, and therefore, an effective technical manner is needed to reduce the fuzzy width of the fusion region while increasing the coating velocity.

### Insulating slurry

First, this application provides a description of an insulating slurry, including resin, an inorganic filler, and an organic solvent, where the resin is selected from polyfluorinated olefin resin prepared by using a suspension polymerization method, and the inorganic filler is selected from two-dimensional inorganic materials.

Currently, polyfluorinated olefin resin is widely applied to positive electrode slurries and insulating slurries due to its advantages such as excellent adhesion, electrolyte resistance, and electrochemical oxidation resistance. However, the insulating slurry using polyfluorinated olefin resin inevitably migrates to the coating region of the positive electrode slurry, and a wider fusion region is formed at the boundary between the positive electrode active material layer and the insulating coating after drying; and a greater coating velocity leads to a wider fusion region, thereby limiting improvement of the coating velocity. Currently, no technician has ever found a root cause for formation of the fusion region. Therefore, to reduce the fuzzy width of the fusion region and ensure high safety performance of the secondary battery, a policy usually used in the prior art is to reduce the coating velocity.

The inventors of this application accidentally have found through extensive studies that the reason why an existing insulating slurry is likely to form a wider fusion region is that the existing insulating slurry uses polyfluorinated olefin resin prepared by using an emulsion polymerization method. An emulsion polymerization system generally includes four basic components: a monomer, an emulsifier, an initiator, and water. Functions of the emulsifier in the emulsion polymerization system include: reducing the surface tension to disperse the monomer into tiny droplets; forming a protective layer on a surface of the droplet to prevent agglomeration; and a solubilization function. A fluorine-containing emulsifier is generally used during preparation of polyfluorinated olefin resin by using the emulsion polymerization method. The most commonly used fluorine-containing emulsifiers include pentadecafluorooctanoic acid (Pentadecafluorooctanoic acid, PFOA) and its alkali metal salts, perfluorobutylsulfonic acid, perfluorobutyl sulfonate, perfluoropolyether, fluoropolyether acid and its salts (for example, perfluoropolyether carboxylic acid, perfluoropolyether ammonium carboxylate), and the like. Due to the polymerization process and other reasons, the emulsifier in polyfluorinated olefin resin prepared by using the emulsion polymerization method is difficult to remove, thereby causing lower surface tension of the insulating slurry. In addition, fluorine has the maximum electronegativity and a strong electron-absorbing feature, its C-F bond energy is higher, and therefore, when the emulsifier used is a fluorine-containing emulsifier, surface activity is higher and surface tension is lower, and in this way, the surface tension of the insulating slurry is further reduced and is significantly less than the surface tension of the positive electrode slurry. Therefore, the insulating slurry using polyfluorinated olefin resin prepared by using the emulsion polymerization method inevitably forms a wider fusion region, which limits improvement of the coating velocity.

The insulating slurry in this application uses polyfluorinated olefin resin prepared by using the suspension polymerization method. A suspension polymerization system generally includes five basic components: a monomer, a dispersant, an initiator, a chain transfer agent, and water. Main functions of the dispersant include: attachment to a surface of a monomer liquid to maintain stability of the polymerization system; and prevention of agglomeration between polymer particles. Water-soluble dispersants such as cellulose ether and polyvinyl alcohol are usually used during preparation of polyfluorinated olefin resin by using the suspension polymerization method. Compared with the emulsion polymerization method, polyfluorinated olefin resin particles prepared by using the suspension polymerization method adsorb less dispersant, which is easy to remove, thereby obtaining resin of higher purity.

The insulating slurry in this application includes no emulsifier or basically no emulsifier, and a mass percentage of the insulating slurry is lower than a lower detection limit, for example, the mass percentage is less than or equal to 1/1000000. Therefore, the insulating slurry obtained by using polyfluorinated olefin resin prepared by using the suspension polymerization method in this application has higher surface tension than the existing insulating slurry, which reduces a surface tension difference between the insulating slurry and the positive electrode slurry, and therefore, the insulating slurry in this application can also reduce the fuzzy width of the fusion region.

In the technical solution of the insulating slurry in this application, the two-dimensional inorganic material is used as the inorganic filler. When the inorganic filler has a two-dimensional (or almost two-dimensional) structure, a diffusion path and diffusion resistance of a liquid solution (that is, the resin solution) to the coating region of the positive electrode slurry become greater. Therefore, using the two-dimensional inorganic material as the inorganic filler can reduce a migration velocity of the insulating slurry, which limits the migration of the insulating slurry to the coating region of the positive electrode slurry and further reduces the fuzzy width of the fusion region.

Therefore, in the technical solution of the insulating slurry in this application, the polyfluorinated olefin resin prepared by using the suspension polymerization method is combined with the two-dimensional inorganic material for use, which can limit the migration of the insulating slurry to the coating region of the positive electrode slurry and further significantly reduce the fuzzy width of the fusion region while improving a coating velocity, thereby improving safety performance of the secondary battery. When the coating velocity in the technical solution in this application is greater than 60 m/min, the fuzzy width of the fusion region can be less than or equal to 0.5 mm, or even less than or equal to 0.2 mm, which is significantly better than an industry average (where the coating velocity is 30-40 m/min, the fuzzy width of the fusion region is greater than 2 mm). The technical solution of the insulating slurry in this application can also ensure that the secondary battery has high energy density. The insulating coating prepared from the insulating slurry in this application can have high mechanical strength, high heat resistance, high insulation, high adhesion, and excellent electrolyte resistance. Even when the negative electrode active material layer comes into contact with the positive electrode plate because the separator is pierced by a foreign matter, a burr, or the like, the negative electrode active material layer does not come in direct contact with the positive electrode current collector, thereby ensuring high safety performance of the secondary battery.

In some embodiments, based on a total mass of the insulating slurry, a mass percentage w1 of the resin may be 1%, 1.5%, 2%, 2.5%, 3%, 3.5%, 4%, 4.5%, 5%, or a range formed by any preceding values. Optionally, the mass percentage w1 of the resin is 1%-5%, 1.5%-5%, 2%-5%, 2.5%-5%, 3%-5%, 3.5%-5%, 4%-5%, 1%-4%, 1.5%-4%, 2%-4%, 2.5%-4%, 3%-4%, 3.5%-4%, 1%-3%, 1.5%-3%, 2%-3%, 2.5%-3%, 1%-2%, or 1.5%-2%.

When the mass percentage of the resin is higher, the mechanical strength, heat resistance, and insulation of the insulating coating are poorer, which cannot effectively prevent the negative electrode active material layer from coming into direct contact with the positive electrode current collector, thereby increasing a risk of an internal short circuit in the secondary battery; and when the mass percentage of the resin is higher, viscosity of the insulating slurry is usually higher, making the insulating slurry difficult to be applied; or when the mass percentage of the resin is lower, adhesion and electrolyte resistance of the insulating coating become poorer, making the insulating coating easy to fall off from the positive electrode current collector, which cannot guarantee safety performance of the secondary battery during long-term use. Therefore, when the mass percentage of the resin is within an appropriate range, the insulating coating has high mechanical strength, high heat resistance, high insulation, high adhesion, and excellent electrolyte resistance. Even when the negative electrode active material layer comes into contact with the positive electrode plate because the separator is pierced by a foreign matter, a burr, or the like, the negative electrode active material layer does not come in direct contact with the positive electrode current collector, thereby ensuring higher safety performance of the secondary battery during long-term use.

In some embodiments, based on a total mass of the insulating slurry, a mass percentage w2 of the inorganic filler may be 5%, 8%, 10%, 12%, 14%, 16%, 18%, 20%, 22%, 24%, 26%, 28%, 30%, 32%, 35%, or a range formed by any preceding values. Optionally, the mass percentage w2 of the inorganic filler is 5%-35%, 10%-35%, 15%-35%, 20%-35%, 25%-35%, 30%-35%, 5%-32%, 10%-32%, 15%-32%, 20%-32%, 25%-32%, 5%-30%, 10%-30%, 15%-30%, 20%-30%, 25%-30%, 5%-28%, 10%-28%, 15%-28%, 20%-28%, 25%-28%, 5%-26%, 10%-26%, 15%-26%, 20%-26%, 5%-24%, 10%-24%, 15%-24%, 20%-24%, 5%-22%, 10%-22%, 15%-22%, 5%-20%, 10%-20%, or 15%-20%.

When the mass percentage of the inorganic filler is higher, adhesion and electrolyte resistance of the insulating coating become poorer, making the insulating coating easy to fall off from the positive electrode current collector, which cannot guarantee safety performance of the secondary battery during long-term use; or when the mass percentage of the inorganic filler is lower, mechanical strength, heat resistance, and insulation of the insulating coating are poorer, which cannot effectively prevent the negative electrode active material layer from coming into direct contact with the positive electrode current collector, thereby increasing the risk of the internal short circuit in the secondary battery. Therefore, when the mass percentage of the inorganic filler is within an appropriate range, the insulating coating has high mechanical strength, high heat resistance, high insulation, high adhesion, and excellent electrolyte resistance. Even when the negative electrode active material layer comes into contact with the positive electrode plate because the separator is pierced by a foreign matter, a burr, or the like, the negative electrode active material layer does not come in direct contact with the positive electrode current collector, thereby ensuring higher safety performance of the secondary battery during long-term use.

In some embodiments, based on a total mass of the insulating slurry, a mass percentage w3 of the organic solvent may be 60%, 65%, 70%, 75%, 80%, 85%, 90%, 94%, or a range formed by any preceding values. Optionally, the mass percentage w3 of the organic solvent is 60%-94%, 65%-94%, 70%-94%, 75%-94%, 80%-94%, 85%-94%, 90%-94%, 60%-90%, 65%-90%, 70%-90%, 75%-90%, 80%-90%, 85%-90%, 60%-85%, 65%-85%, 70%-85%, 75%-85%, 80%-85%, 60%-80%, 65%-80%, 70%-80%, 75%-80%, 60%-75%, 65%-75%, 70%-75%, 60%-70%, or 65%-70%.

In some embodiments, based on a total mass of the insulating slurry, a mass percentage w1 of the resin is 1%-5%, a mass percentage w2 of the inorganic filler is 5%-35%, and a mass percentage w3 of the organic solvent is 60%-94%. The mass percentages of the resin, the inorganic filler, and the organic solvent are properly adjusted, which can reduce the fuzzy width of the fusion region effectively while significantly increasing the coating velocity. In addition, the obtained insulating coating has high mechanical strength, high heat resistance, high insulation, high adhesion, and excellent electrolyte resistance, and the secondary battery using the insulating coating can have both good electrochemical performance and higher safety performance.

When w1/w2 is smaller, the mass percentage of the inorganic filler is higher, and the insulating coating has poorer adhesion and electrolyte resistance; or when w1/w2 is larger, the mass percentage of the inorganic filler is lower, which cannot effectively prevent the resin solution from migrating to the coating region of the positive electrode slurry, so that the fusion region is easy to widen. That w1/w2 is in a proper range can effectively reduce the fuzzy width of the fusion region and also ensure that the insulating coating has high mechanical strength, high heat resistance, high insulation, high adhesion, and excellent electrolyte resistance. In some embodiments, w1/w2 is 0.05-1. Optionally, w1/w2 is 0.1-1, 0.12-1, 0.15-1, or 0.18-1.

The viscosity of the insulating slurry mainly affects coating performance of the insulating slurry. When the viscosity is excessively large, the insulating slurry cannot be applied on the surface of the positive electrode current collector; and the viscosity of the insulating slurry should not be excessively small, otherwise fluidity of the insulating slurry is stronger, causing the fusion region to be easy to widen. In some embodiments, the viscosity of the insulating slurry at 25°C is 1000-20000 cps. For example, the viscosity of the insulating slurry at 25°C is 1000 cps, 2000 cps, 3000 cps, 4000 cps, 5000 cps, 6000 cps, 7000 cps, 8000 cps, 9000 cps, 10000 cps, 11000 cps, 12000 cps, 13000 cps, 14000 cps, 15000 cps, 16000 cps, 17000 cps, 18000 cps, 19000 cps, 20000 cps, or a range formed by any preceding values. Optionally, the viscosity of the insulating slurry at 25°C is 2000-20000 cps, 4000-20000 cps, 6000-20000 cps, 8000-20000 cps, 10000-20000 cps, 12000-20000 cps, 14000-20000 cps, 16000-20000 cps, 18000-20000 cps, 1000-15000 cps, 2000-15000 cps, 4000-15000 cps, 6000-15000 cps, 8000-15000 cps, 10000-15000 cps, 12000-15000 cps, 1000-10000 cps, 2000-10000 cps, 4000-10000 cps, 6000-10000 cps, 8000-10000 cps, 1000-8000 cps, 2000-8000 cps, 3000-8000 cps, 4000-8000 cps, 5000-8000 cps, 6000-8000 cps, 1000-5000 cps, 2000-5000 cps, 3000-5000 cps, or 4000-5000 cps.

Considering that the insulating coating needs to have both excellent adhesion and excellent electrolyte resistance, the polyfluorinated olefin resin may have a moderate molecular weight. In some embodiments, a number-average molecular weight of the polyfluorinated olefin resin is 600000-1500000. Optionally, the number-average molecular weight of the polyfluorinated olefin resin is 1100000-1300000.

Considering that the insulating coating needs to have both excellent adhesion and excellent electrolyte resistance, and also considering guaranteeing processing performance of the positive electrode plate, the polyfluorinated olefin resin may have moderate crystallinity. When the crystallinity of the polyfluorinated olefin resin is lower, a degree of swelling of the polyfluorinated olefin resin in the electrolyte is higher, electrolyte resistance of the insulating coating becomes poorer, and the insulating coating is easy to fall off from the positive electrode current collector during long-term use of the secondary battery; or when the crystallinity of polyfluorinated olefin resin is higher, processing performance of the positive electrode plate prepared from the polyfluorinated olefin resin becomes poorer, and the positive electrode plate is easy to break during winding. In some embodiments, the crystallinity of polyfluorinated olefin resin is 30%-60%. Optionally, the crystallinity of polyfluorinated olefin resin is 40%-50%.

Considering that the insulating coating needs to have both excellent adhesion and excellent electrolyte resistance, and also considering guaranteeing processing performance of the positive electrode plate, the polyfluorinated olefin resin may have a moderate melting point. When the melting point of the polyfluorinated olefin resin is lower, a degree of swelling of the polyfluorinated olefin resin in the electrolyte is higher, electrolyte resistance of the insulating coating becomes poorer, and the insulating coating is easy to fall off from the positive electrode current collector during long-term use of the secondary battery; or when the melting point of polyfluorinated olefin resin is higher, processing performance of the positive electrode plate prepared from the polyfluorinated olefin resin becomes poorer, and the positive electrode plate is easy to break during winding. In some embodiments, the melting point Tₘ of the polyfluorinated olefin resin is 150-180°C. Optionally, the melting point of the polyfluorinated olefin resin is 155-175°C.

In some embodiments, the polyfluorinated olefin resin prepared by using the suspension polymerization method is selected from at least one of polyvinylidene fluoride (PVDF) resin, polyvinyl fluoride resin, polytetrafluoroethylene resin, vinylidene fluoride-hexafluoropropylene copolymer (VDF-HFP) resin, vinylidene fluoride-trifluoroethylene copolymer resin, vinylidene fluoride-chlorotrifluoroethylene copolymer resin, vinylidene fluoride-tetrafluoroethylene copolymer resin, and vinylidene fluoride-tetrafluoroethylene-hexafluoropropylene copolymer resin.

The polyfluorinated olefin resin prepared by using the suspension polymerization method may be purchased from companies such as Solvay company and Kureha company; or certainly, the polyfluorinated olefin resin prepared by using the suspension polymerization method may alternatively be obtained by synthesis. For example, the polyfluorinated olefin resin prepared by using the suspension polymerization method includes at least one of commercially purchased Solef^{®}6008, Solef^{®}6010, Solef^{®}6012, Solef^{®}6020, Solef^{®}5120, Solef^{®}5130, Solef^{®}5140, Solef^{®}9007, Solef^{®}1015, Solef^{®}75040, and Solef^{®}75130.

In some embodiments, the two-dimensional inorganic material has layered, flake-like, or thin plate-like morphology.

In some embodiments, a material of the two-dimensional inorganic material is selected from at least one of layered silicate and a two-dimensional molecular sieve. Morphology of the layered silicate and the two-dimensional molecular sieve is two-dimensional or almost two-dimensional. For example, the morphology is layered, flake-like, or thin plate-like.

A crystal structure of the layered silicate is formed by stacking structural unit layers (or crystal layers) in parallel. The structural unit layer includes two parts: a sheet layer and an interlayer substance. The sheet layer is usually formed by a silicon-oxygen tetrahedral sheet (Tetrahedral sheet) and a metal cation (for example, Mg²⁺, Fe²⁺, and Al³⁺)-oxygen octahedral sheet (Octohedral sheet) at a ratio of 1:1 or 2: 1. The interlayer substance is a substance between the sheet layers, and the interlayer substance can be void or filled with water molecules, cations, anions, and the like. The two-dimensional molecular sieve is crystalline aluminosilicate and has a spatial network structure formed by staggered arrangement of silicon-oxygen tetrahedron and aluminum-oxygen tetrahedron.

The morphology of the layered silicate and the two-dimensional molecular sieve used in this application is layered, flake-like, or thin plate-like. When the insulating slurry migrates to the coating region of the positive electrode slurry, the foregoing inorganic filler can increase a path and resistance of diffusing to the coating region of the positive electrode slurry by the liquid solution (that is, the resin solution), thereby reducing the migration velocity of the insulating slurry and further reducing the fuzzy width of the fusion region. The layered silicate and the two-dimensional molecular sieve also have a stronger adsorption capacity and can be combined with the resin in the insulating slurry by van der Waals force, thereby further reducing the migration velocity of the insulating slurry and the fuzzy width of the fusion region.

Both the layered silicate and the two-dimensional molecular sieve have advantages of good thermal stability and low costs, and also have a layered structure similar to graphite, and van der Waals force of an interlayer structure is far smaller than ionic force within the layer. Therefore, interlayer slippage can occur under pressure. Therefore, the insulating coating using the foregoing inorganic filler has better heat resistance and insulating performance, thereby further improving safety performance of the secondary battery. In addition, the layered silicate and the two-dimensional molecular sieve also have good toughness, and therefore, the positive electrode plate prepared from the layered silicate and the two-dimensional molecular sieve has good processing performance and is not easy to break during winding.

Optionally, the layered silicate includes at least one of mica powder, fluorophlogopite powder, talc powder, hydrotalcite, and a hydrotalcite-like compound.

Optionally, the two-dimensional molecular sieve includes at least one of an MWW-type, an SAPO-type, an FER-type, and a PLS-n-type molecular sieve. For example, the two-dimensional molecular sieve includes at least one of MCM-22, MCM-49, MCM-56, SAPO-34, SAPO-18, and Al-PLS-3.

In some embodiments, when the insulating slurry includes at least one of mica powder and talc powder, some transition metal impurities may be removed from mica powder and talc powder by pickling and water washing processes in advance. These transition metal impurities may hinder electrochemical performance of the secondary battery, for example, increasing self-discharging of the secondary battery. This application imposes no particular limitation on a quantity of pickling and water washing, which can be selected based on an actual need. A weak acid aqueous solution such as a boric acid aqueous solution is preferably used during pickling. Certainly, a dilute strong acid solution may also be selected, such as a nitric acid, sulfuric acid, or hydrochloric acid aqueous solution with a mass percentage of about 1%.

In some embodiments, a median particle size by volume Dᵥ50 of the two-dimensional inorganic material is 0.5-10 µm. For example, the median particle size by volume Dᵥ50 of the two-dimensional inorganic material is 0.5 µm, 1 µm, 2 µm, 3 µm, 4 µm, 5 µm, 6 µm, 7 µm, 8 µm, 9 µm, 10 µm, or a range formed by any preceding values. Optionally, the median particle size by volume Dᵥ50 of the two-dimensional inorganic material is 0.5-9 µm, 0.5-8 µm, 0.5-7 µm, 0.5-6 µm, 0.5-5 µm, 0.5-4 µm, 0.5-3 µm, 1-10 µm, 1-9 µm, 1-8 µm, 1-7 µm, 1-6 µm, 1-5 µm, 1-4 µm, or 1-3 µm.

The two-dimensional inorganic material has layered, flake-like, or thin plate-like morphology. Therefore, the two-dimensional inorganic material generally has a high diameter-thickness ratio. When the diameter-thickness ratio of the two-dimensional inorganic material is smaller, the two-dimensional inorganic material has a weaker effect of reducing the migration velocity of the insulating slurry, thereby increasing the fuzzy width of the fusion region slightly. In some embodiments, the diameter-thickness ratio of the two-dimensional inorganic material may be greater than or equal to 30:1, 40:1, 50:1, 60:1, 70:1, 80:1, 90:1, 100:1, 110:1, 120:1, 130:1, 140:1, or 150:1. A greater diameter-thickness ratio of the two-dimensional inorganic material leads to a more significant effect of reducing the migration velocity of the insulating slurry, but leads to greater manufacturing costs of the two-dimensional inorganic material. In some embodiments, optionally, the diameter-thickness ratio of the two-dimensional inorganic material is 50:1-150:1, 50:1-140:1, 50:1-130:1, 50:1-120:1, 50:1-110:1, 50:1-100:1, 50:1-90:1, or 50:1-80:1.

The organic solvent is not particularly limited in type in this application and may be a well-known compound capable of dissolving the resin in the art. In some embodiments, the organic solvent includes at least one of N-methylpyrrolidone (NMP), triethyl phosphate, dimethyl sulfoxide, N,N-dimethylformamide, and N,N-dimethylacetamide.

In some embodiments, the insulating slurry includes the resin, the inorganic filler, and the organic solvent, where the resin is selected from polyfluorinated olefin resin prepared by using the suspension polymerization method, and the inorganic filler is selected from two-dimensional inorganic materials; based on the total mass of the insulating slurry, the mass percentage w1 of the resin is 1%-5%, the mass percentage w2 of the inorganic filler is 5%-35%, and the mass percentage w3 of the organic solvent is 60%-94%; the polyfluorinated olefin resin prepared by using the suspension polymerization method is selected from at least one of polyvinylidene fluoride resin, polyvinyl fluoride resin, polytetrafluoroethylene resin, vinylidene fluoride-hexafluoropropylene copolymer resin, vinylidene fluoride-trifluoroethylene copolymer resin, vinylidene fluoride-chlorotrifluoroethylene copolymer resin, vinylidene fluoride-tetrafluoroethylene copolymer resin, and vinylidene fluoride-tetrafluoroethylene-hexafluoropropylene copolymer resin; the two-dimensional inorganic material has layered, flake-like, or thin plate-like morphology; the diameter-thickness ratio of the two-dimensional inorganic material is greater than or equal to 50:1; and the material of the two-dimensional inorganic material is selected from at least one of layered silicate and the two-dimensional molecular sieve.

In this application, a number-average molecular weight of the resin has a meaning well-known in the art and may be measured by using an instrument and a method well-known in the art. For example, the number-average molecular weight of the resin may be determined by gel permeation chromatography (GPC) with a test conducted using an Agilent (Agilent) 1290 Infinity II GPC system.

In this application, crystallinity of the resin has a meaning well-known in the art and may be determined by using an instrument and a method well-known in the art. For example, the crystallinity of the resin may be determined via differential scanning calorimetry (DSC) with a test conducted using a differential scanning calorimeter of DSC-3 type from Mettler-Toledo (Mettler-Toledo).

In this application, a melting point of the resin has a meaning well-known in the art and may be determined by using an instrument and a method well-known in the art. For example, the melting point of the resin may be determined in accordance with the GB/T 29611-2013 Standard: Rubber, raw-Determination of the glass transition temperature-Differential scanning calorimetry (DSC) with a test conducted using a differential scanning calorimeter of DSC-3 type from Mettler-Toledo (Mettler-Toledo).

In this application, viscosity of the insulating slurry has a meaning well-known in the art and may be determined by using an instrument and a method well-known in the art. For example, the viscosity of the insulating slurry may be determined in accordance with the GB/T 2794-2013 Standard: Determination for viscosity of adhesives-Single cylinder rotational viscometer method.

In this application, a median particle size by volume Dᵥ50 of the material has a meaning well-known in the art, representing a corresponding particle size when the cumulative volume distribution reaches 50%, and may be determined by using an instrument and a method well-known in the art. For example, the median particle size by volume Dᵥ50 of the material is easily determined in accordance with the GB/T 19077-2016 Standard: Particle size distribution-Laser diffraction method by using a laser particle size analyzer, for example, a laser particle size analyzer of Mastersizer 2000E from Malvern Instruments Ltd. in UK.

In this application, a diameter-thickness ratio of the two-dimensional inorganic material has a meaning well-known in the art and may be determined by using an instrument and a method well-known in the art. For example, the diameter-thickness ratio of the two-dimensional inorganic material may be determined in accordance with the JC/T 2063-2011 Standard: Determination method of diameter-thickness ratio in mica powder.

### Preparation method of insulating slurry

The preparation method of insulating slurry, may include the following steps: S100. Disperse an organic solvent and an inorganic filler uniformly to obtain a first slurry. S200. Add resin particles to the obtained first slurry in a dispersed state and obtain the insulating slurry after uniform dispersion. The inorganic filler is selected from at least one two-dimensional inorganic material, and the resin particles are selected from at least one polyfluorinated olefin resin prepared by using a suspension polymerization method.

Preferably, based on a total mass of the insulating slurry, a mass percentage of the resin particles is 1%-5%, a mass percentage of the inorganic filler is 5%-30%, and a mass percentage of the organic solvent is 65%-94%.

The resin particles use polyfluorinated olefin resin prepared by using the suspension polymerization method, and therefore, the resin particles generally have larger particle sizes and are not easy to agglomerate. In some embodiments, the resin particles are primary particles. Optionally, a median particle size by volume Dᵥ50 of the primary particles is 20-150 µm. For example, the median particle size by volume Dᵥ50 of the primary particles is 20 µm, 30 µm, 40 µm, 50 µm, 60 µm, 70 µm, 80 µm, 90 µm, 100 µm, 110 µm, 120 µm, 130 µm, 140 µm, 150 µm, or a range formed by any preceding values. Optionally, the median particle size by volume Dᵥ50 of the primary particles is 30-150 µm, 50-150 µm, 70-150 µm, 90-150 µm, 20-120 µm, 30-120 µm, 50-120 µm, 70-120 µm, 90-120 µm, 20-100 µm, 30-100 µm, 50-100 µm, 70-100 µm, 20-80 µm, 30-80 µm, or 50-80 µm.

Preferably, in step S100, a dispersion linear velocity is 20-100 m/s, and dispersion time is 15-120 min.

Preferably, in step S200, a dispersion linear velocity is 20-100 m/s, and dispersion time is 120-480 min.

Preferably, the method further includes: S300. Filter the obtained insulating slurry. Optionally, the obtained insulating slurry is filtered by using a 100-200 mesh filter screen.

The preparation method of insulating slurry can be used to prepare the insulating slurry as mentioned. It should be noted that, for related parameters of the insulating slurry prepared by using the preparation method of insulating slurry, refer to the insulating slurry provided in the embodiments of this application.

### Positive electrode plate

An aspect of the embodiments of this application provides a positive electrode plate, including a positive electrode current collector, a positive electrode active material layer, and an insulating coating, where the positive electrode active material layer is located on at least part of a surface of the positive electrode current collector; and the insulating coating is located on the surface of the positive electrode current collector and abuts an edge of the positive electrode active material layer along a length direction of the positive electrode current collector, where the insulating coating is a layer formed by drying the insulating slurry in any one of the embodiments of the first aspect of the embodiments of this application or a layer formed by drying the insulating slurry prepared by using the method in any one of the embodiments of the second aspect of the embodiments of this application.

The positive electrode plate in this application can reduce a probability of direct contact between the negative electrode active material layer and the positive electrode current collector, thereby ensuring that the secondary battery has high safety performance. The positive electrode plate in this application further has good processing performance and is not easy to break during winding.

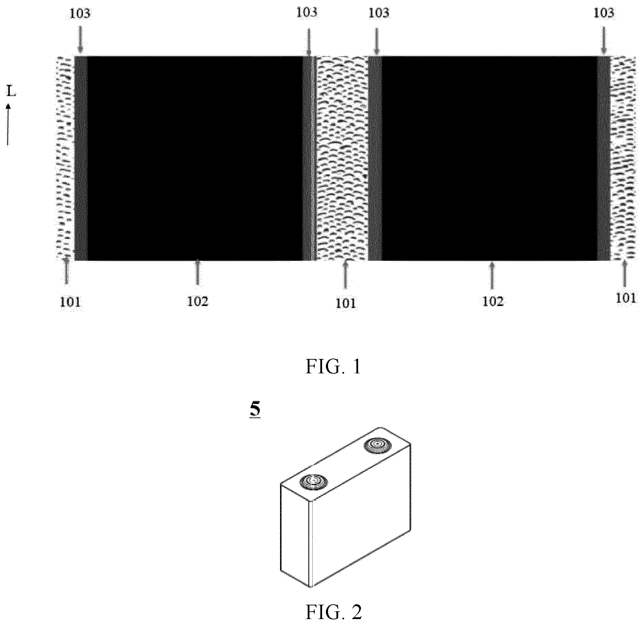

In some embodiments, the insulating coating is located on one or two sides of the positive electrode active material layer along a length direction. Optionally, the insulating coating is located on the two sides of the positive electrode active material layer along the length direction. FIG. 1 is a schematic diagram of an embodiment of a positive electrode plate according to this application. As shown in FIG. 1, the positive electrode plate includes a positive electrode current collector 101, a positive electrode active material layer 102, and an insulating coating 103. The insulating coating 103 is located on two sides of the positive electrode active material layer 102 along a length direction L. This application is not limited thereto.

A thickness of the insulating coating is not particularly limited in this application and may be adjusted based on an actual need. In some embodiments, the thickness of the insulating coating is 2-150 µm,

A width of the insulating coating is not particularly limited in this application and may be adjusted based on an actual need. In some embodiments, the width of the insulating coating is 0.1-15 mm.

In some embodiments, the positive electrode current collector has two opposite surfaces in its thickness direction, and the positive electrode active material layer is provided on either or both of the two opposite surfaces of the positive electrode current collector.

In some embodiments, the positive electrode current collector has two opposite surfaces in its thickness direction, and the insulating coating is provided on either or both of the two opposite surfaces of the positive electrode current collector.

The positive electrode active material layer includes a positive electrode active material, and the positive electrode active material may be a positive electrode active material for secondary batteries well-known in the art. For example, the positive electrode active material may include at least one of lithium transition metal oxide, olivine-structured lithium-containing phosphate, and their respective modified compounds. Examples of the lithium transition metal oxide may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of the olivine-structured lithium-containing phosphate may include at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds. This application is not limited to these materials, and other conventionally well-known materials that can be used as a positive electrode active material for secondary batteries may also be used. One type of these positive electrode active materials may be used alone, or two or more types may be used in combination. In this application, the modified compounds of the foregoing positive electrode active materials may be obtained through doping modification or surface coating modification to the positive electrode active materials.

In an embodiment, the positive electrode active material includes at least one of olivine-structured lithium-containing phosphate and its modified compound.

In some embodiments, the positive electrode active material layer further optionally includes a positive electrode conductive agent. The positive electrode conductive agent is not particularly limited in type in this application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments, based on a total mass of the positive electrode active material layer, a mass percentage of the positive electrode conductive agent is less than or equal to 5%.

In some embodiments, the positive electrode active material layer further optionally includes a positive electrode binder. The positive electrode binder is not particularly limited in type in this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, based on a total mass of the positive electrode active material layer, a mass percentage of the positive electrode binder is less than or equal to 5%.

In some embodiments, the positive electrode current collector may be a metal foil or a composite current collector. For example, for the metal foil, an aluminum foil may be used. The composite current collector may include a polymer material matrix and a metal material layer formed on at least one surface of the polymer material matrix. For example, the metal material may be selected from at least one of aluminum, aluminum alloy, nickel, nickel alloy, titanium, titanium alloy, silver and silver alloy. For example, the polymer material matrix may be selected from polypropylene (PP), polyethylene terephthalate (PET), polybutylene terephthalate (PBT), polystyrene (PS), and polyethylene (PE).

The positive electrode active material layer is usually formed by applying a positive electrode slurry onto the positive electrode current collector, followed by drying and cold-pressing. The positive electrode slurry is usually formed by dispersing the positive electrode active material, the optional conductive agent, the optional binder, and any other components in a solvent and stirring them evenly. The solvent may be but is not limited to N-methylpyrrolidone (NMP).

A preparation method of positive electrode plate in this application is well-known. In some embodiments, the positive electrode plate may be obtained by applying the positive electrode slurry and the insulating slurry in any one of the embodiments of the first aspect of the embodiments of this application on the positive electrode current collector, followed by drying and cold-pressing.

### Secondary battery

A further aspect of the embodiments of this application provides a secondary battery, including a positive electrode plate, a negative electrode plate, and an electrolyte. During charge and discharge of the secondary battery, active ions migrate between the positive electrode plate and the negative electrode plate for intercalation and deintercalation, and the electrolyte conducts the active ions between the positive electrode plate and the negative electrode plate.

### [Positive electrode plate]

The positive electrode plate used in the secondary battery of this application is the positive electrode plate in any one of the embodiments of the third aspect of the embodiments of this application.

### [Negative electrode plate]

In some embodiments, the negative electrode plate includes a negative electrode current collector and a negative electrode active material layer that is provided on at least one surface of the negative electrode current collector and that includes a negative electrode active material. For example, the negative electrode current collector has two opposite surfaces in its thickness direction, and the negative electrode active material layer is disposed on either or both of the two opposite surfaces of the negative electrode current collector.

The negative electrode active material may be a negative electrode active material for secondary batteries well-known in the art. For example, the negative electrode active material includes but is not limited to at least one of natural graphite, artificial graphite, soft carbon, hard carbon, a silicon-based material, a tin-based material, and lithium titanate. The silicon-based material may include at least one of elemental silicon, silicon oxide, silicon-carbon composite, silicon-nitrogen composite, and a silicon alloy material. The tin-based material may include at least one of elemental tin, tin oxide, and a tin alloy material. This application is not limited to these materials, and other conventionally well-known materials that can be used as a negative electrode active material for secondary batteries can also be used. One type of these negative electrode active materials may be used alone, or two or more types may be used in combination.

In some embodiments, the negative electrode active material layer further optionally includes a negative electrode conductive agent. The negative electrode conductive agent is not particularly limited in type in this application. For example, the negative electrode conductive agent may include at least one of superconducting carbon, conductive graphite, acetylene black, carbon black, Ketjen black, carbon dots, carbon nanotubes, graphene, and carbon nanofiber. In some embodiments, based on a total mass of the negative electrode active material layer, a mass percentage of the negative electrode conductive agent is less than or equal to 5%.

In some embodiments, the negative electrode active material layer further optionally includes a negative electrode binder. The negative electrode binder is not particularly limited in type in this application. For example, the negative binder may include at least one of styrene-butadiene rubber (SBR), water-soluble unsaturated resin SR-1B, water-borne acrylic resin (for example, polyacrylic acid PAA, poly(methyl acrylic acid) PMAA, and sodium polyacrylate PAAS), polyacrylamide (PAM), polyvinyl alcohol (PVA), sodium alginate (SA), and carboxymethyl chitosan (CMCS). In some embodiments, based on a total mass of the negative electrode active material layer, a mass percentage of the negative electrode binder is less than or equal to 5%.

In some embodiments, the negative electrode active material layer further optionally includes another adjuvant. For example, the another adjuvant may include a thickener, for example, sodium carboxymethyl cellulose (CMC-Na) and a PTC thermistor material. In some embodiments, based on a total mass of the negative electrode active material layer, a mass percentage of the another adjuvant is less than or equal to 2%.

In some embodiments, the negative electrode current collector may be a metal foil or a composite current collector. For example, for the metal foil, a copper foil may be used. The composite current collector may include a polymer material matrix and a metal material layer formed on at least one surface of the polymer material matrix. For example, the metal material may be selected from at least one of copper, copper alloy, nickel, nickel alloy, titanium, titanium alloy, silver and silver alloy. For example, the polymer material matrix may be selected from polypropylene (PP), polyethylene terephthalate (PET), polybutylene terephthalate (PBT), polystyrene (PS), and polyethylene (PE).

The negative electrode active material layer is usually formed by applying a negative electrode slurry onto the negative electrode current collector, followed by drying and cold-pressing. The negative electrode slurry is usually formed by dispersing the negative electrode active material, the optional conductive agent, the optional binder, and the optional another adjuvant in a solvent and stirring them uniformly. The solvent may be but is not limited to N-methylpyrrolidone (NMP) or deionized water.

The negative electrode plate does not exclude additional functional layers other than the negative electrode active material layer. For example, in some embodiments, the negative electrode plate described in this application further includes a conductive primer layer (for example, formed by a conductive agent and a binder) sandwiched between the negative electrode current collector and the negative electrode active material layer and disposed on a surface of the negative electrode current collector. In some other embodiments, the negative electrode plate in this application further includes a protective layer that covers the surface of the negative electrode active material layer.

### [Electrolyte]

The electrolyte is not specifically limited to any particular type and may be selected based on a need. For example, the electrolyte may be selected from at least one of a solid electrolyte and a liquid electrolyte (namely, an electrolyte solution).

In some embodiments, the electrolyte is a liquid electrolyte, where the liquid electrolyte includes electrolyte salt and a solvent.

The electrolyte salt is not specifically limited in type and may be selected based on an actual need. In some embodiments, for example, the electrolyte salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro oxalato phosphate (LiTFOP).

The solvent is not specifically limited in type and may be selected based on an actual need. In some embodiments, for example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), tetramethylene sulfone (SF), methyl sulfone (MSM), ethyl methanesulfonate (EMS), and diethyl sulfone (ESE).

In some embodiments, the electrolyte further optionally includes an additive. For example, the additive may include a negative electrode film forming additive, or may include a positive electrode film forming additive, or may include an additive capable of improving some performance of the battery, for example, an additive for improving over-charge performance of the battery, an additive for improving high-temperature performance of the battery, or an additive for improving low-temperature power performance of the battery.

### [Separator]

Secondary batteries using a liquid electrolyte and some secondary batteries using a solid electrolyte further include a separator. The separator is sandwiched between the positive electrode plate and the negative electrode plate to mainly prevent a short circuit of the positive electrode and the negative electrode, while allowing the active ions to pass through. The separator is not particularly limited in type in this application and may be any well-known porous separator with good chemical stability and mechanical stability.

In some embodiments, a material of the separator may include at least one of glass fiber, non-woven fabric, polyethylene, polypropylene polyethylene, and polyvinylidene fluoride. The separator may be a single-layer thin film or a multi-layer composite thin film. When the separator is a multilayer composite film, each layer is made of the same or different materials.

In some embodiments, the positive electrode plate, the separator, and the negative electrode plate may be made into an electrode assembly through winding or stacking.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, at least one of polypropylene (PP), polybutylene terephthalate (PBT), and polybutylene succinate (PBS).

The secondary battery is not particularly limited in shape in this application and may be cylindrical, rectangular, or of any other shapes. FIG. 2 shows a rectangular secondary battery 5 as an example.

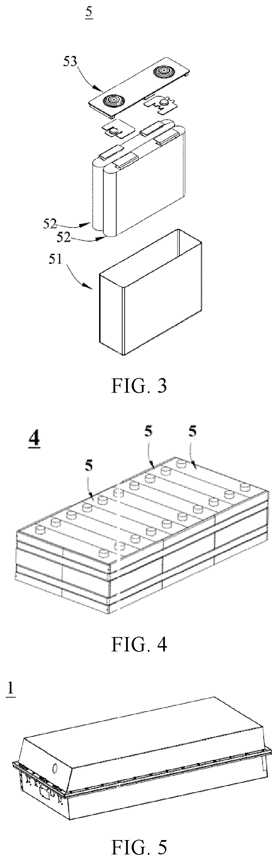

In some embodiments, as shown in FIG. 3, the outer package may include a housing 51 and a cover plate 53. The housing 51 may include a bottom plate and a side plate connected to the bottom plate, and the bottom plate and the side plate enclose an accommodating cavity. The housing 51 has an opening connected to the accommodating cavity, and the cover plate 53 is configured to cover the opening to seal the accommodating cavity. A positive electrode plate, a negative electrode plate, and a separator may be made into an electrode assembly 52 through winding or stacking. The electrode assembly 52 is packaged in the accommodating cavity. The liquid electrolyte infiltrates the electrode assembly 52. There may be one or more electrode assemblies 52 in the secondary battery 5, and the quantity may be adjusted as required.

A preparation method of secondary battery in this application is well-known. In some embodiments, a positive electrode plate, a separator, a negative electrode plate, and an electrolyte may be assembled into a secondary battery. For example, the positive electrode plate, the separator, and the negative electrode plate can form the electrode assembly through winding or stacking; and the electrode assembly is put in the outer package, and after drying, and the electrolyte is injected, followed by processes such as vacuum packaging, standing, formation, and shaping to obtain the secondary battery.

In some embodiments of this application, secondary batteries in this application may be assembled into a battery module, and the battery module may include a plurality of secondary batteries. A specific quantity of the secondary batteries may be adjusted based on application and capacity of the battery module.

FIG. 4 is a schematic diagram of a battery module 4 used as an example. As shown in FIG. 4, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

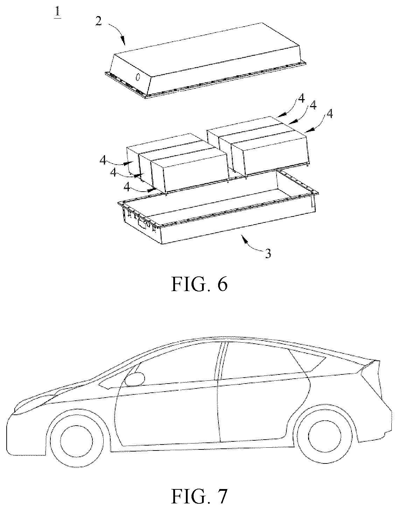

FIG. 5 and FIG. 6 are schematic diagrams of a battery pack 1 used as an example. As shown in FIG. 5 and FIG. 6, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

### Electric apparatus

An embodiment of this application further provides an electric apparatus. The electric apparatus includes at least one of the secondary battery, the battery module, or the battery pack in this application. The secondary battery, the battery module, or the battery pack may be used as a power source for the electric apparatus, or an energy storage unit of the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, and an energy storage system.

The secondary battery, the battery module, or the battery pack may be selected for the electric apparatus based on requirements for using the apparatus.

FIG. 7 is a schematic diagram of an electric apparatus used as an example. The electric apparatus is a battery electric vehicle, a hybrid electric vehicle, a plug-in hybrid electric vehicle, or the like. To satisfy a requirement of the electric apparatus for high power and high energy density, a battery pack or a battery module may be used.

For another example, the electric apparatus may be a mobile phone, a tablet computer, a notebook computer, or the like. The electric apparatus is generally required to be light and thin and may use the secondary battery as a power source.

### Examples

Content disclosed in this application is described in detail in the following examples. These examples are intended only for illustrative purposes because various modifications and changes made without departing from the scope of the content disclosed in this application are apparent to those skilled in the art. Unless otherwise stated, all parts, percentages, and ratios reported in the following examples are based on masses, all reagents used in the examples are commercially available or synthesized in a conventional manner and can be used directly without further treatment, and all instruments used in the examples are commercially available.

Polyfluorinated olefin resin prepared by using the emulsion polymerization method is purchased from Arkema company, and polyfluorinated olefin resin prepared by using the suspension polymerization method is purchased from Solvay company.

### Example 1

### Preparation of insulating slurry

After being subjected to pickling and water washing to remove impurities, talc powder with a median particle size by volume Dᵥ50 of 2 µm and a diameter-thickness ratio of 100:1 was added into an organic solvent NMP and dispersed uniformly, a dispersion linear velocity was 22 m/s, and dispersion time was 60 min; and then, in a dispersed state, polyvinylidene fluoride (PVDF) resin Solef^{®}5130 with a number-average molecular weight of 1100000, crystallinity of 45%, and a melting point Tₘ of 172°C was added, a dispersion linear velocity was 20 m/s, and dispersion time was 240 min; and finally, a resulting mixture was filtered by using a 150-mesh filter screen to obtain an insulating slurry. Based on a total mass of the insulating slurry, a mass percentage w1 of the resin was 3.8%, a mass percentage w2 of the inorganic filler was 21.2%, and a mass percentage w3 of the organic solvent was 75.0%.

### Preparation of positive electrode plate

A positive electrode active material lithium iron phosphate, a conductive agent carbon black (Super P), and a binder polyvinylidene fluoride (PVDF) were fully stirred and mixed in an appropriate amount of solvent NMP in a mass ratio of 97:1:2 to form a uniform positive electrode slurry; and the positive electrode slurry and the foregoing insulating slurry were uniformly applied on a surface of a positive electrode current collector aluminum foil at a same coating velocity in a manner shown in FIG. 1, followed by drying (until a percentage of NMP in the positive electrode plate was less than 0.3%) and cold-pressing to obtain a positive electrode plate. A coating weight of the positive electrode slurry was 360 mg/1540.25 mm², a coating width of the insulating slurry was 10 mm, and a coating velocity was 60 m/min.

### Preparation of negative electrode plate

A negative electrode active material graphite, a binder styrene-butadiene rubber (SBR), a thickener sodium carboxymethyl cellulose (CMC-Na), and a conductive agent carbon black (Super P) were fully stirred and mixed in an appropriate amount of solvent deionized water in a mass ratio of 96.2:1.8:1.2:0.8 to form a uniform negative electrode slurry; and the negative electrode slurry was uniformly applied on a surface of the negative electrode current collector copper foil, followed by drying and cold-pressing to obtain a negative electrode plate.

### Preparation of electrolyte

Ethylene carbonate (EC), ethyl methyl carbonate (EMC), and diethyl carbonate (DMC) were mixed in a volume ratio of 1:1:1 to obtain an organic solvent, and then fully dried LiPF₆ was dissolved in the foregoing organic solvent to obtain an electrolyte with a concentration of 1 mol/L.

### Preparation of separator

A porous polyethylene film was used as a separator.

### Preparation of secondary battery

A positive electrode plate, a separator, and a negative electrode plate were stacked in order and wound to obtain an electrode assembly. The electrode assembly was placed into an outer package, and after drying, the liquid electrolyte was injected, followed by processes such as vacuum packaging, standing, formation, and shaping to obtain a secondary battery.

### Examples 2 to 21 and Comparative Examples 1 to 3

The preparation method of secondary battery was similar to that in Example 1, except that composition of the insulating slurry was different. Details parameters are given in Table 1. Talc powder or mica powder used in Examples 1 to 15, Examples 19 to 21, and Comparative Example 3 were subjected to pickling (by hydrochloric acid aqueous solution with a mass percentage of 1%) and water washing, while talc powder used in Example 16 was not subjected to pickling or water washing.

### Comparative Example 4

The preparation method of secondary battery was similar to that in Example 1, except for a different order of adding materials of the insulating slurry.

Polyvinylidene fluoride (PVDF) resin Solef^{®}5130 with a number-average molecular weight of 1100000, crystallinity of 45%, and a melting point Tₘ of 172°C was added into an organic solvent NMP and dispersed uniformly, a dispersion linear velocity was 22 m/s, and dispersion time was 60 min; and then, in a dispersed state, after being subjected to pickling and water washing to remove impurities, and talc powder with a median particle size by volume Dᵥ50 of 2 µm and a diameter-thickness ratio of 100:1 was added, where a dispersion linear velocity was 20 m/s, and dispersion time was 240 min; and finally, the resulting mixture was filtered by using a 150-mesh filter screen to obtain the insulating slurry. Based on a total mass of the insulating slurry, a mass percentage w1 of the resin was 3.8%, a mass percentage w2 of the inorganic filler was 21.2%, a mass percentage w3 of the organic solvent was 75.0%.

### Tests

### (1) Viscosity test of insulating slurry

The viscosity of the obtained insulating slurry was measured in accordance with the GB/T 2794-2013 Standard: Determination for viscosity of adhesives-Single cylinder rotational viscometer method. Test temperature was 25°C, and a test instrument was a Brookfield DVS+ rotational viscometer from Brookfield in USA.

### (2) Surface tension test of insulating slurry

Surface tension of the obtained insulating slurry under 25°C was determined by using a DCAT9T Tensiometer from Dataphysics in Germany.

### (3) Analysis of high-velocity coating results of insulating slurry

Positive electrode plates corresponding to the examples and comparative examples were passed through a CCD visual inspection device to measure fuzzy widths (that is, the maximum widths) of fusion regions on the positive electrode plates. Coating velocities of the positive electrode slurry and the insulating slurry were both 36 m/min in Comparative Example 1 and Comparative Example 3, both 45 m/min in Comparative Example 2, and both 60 m/min in Examples 1 to 21.

### (4) Electrolyte resistance test of insulating coating

The positive electrode plates corresponding to each example and comparative example were separately immersed in the foregoing standard electrolyte for 168 hours at room temperature, then the standard electrolyte was removed in a glove box, and the insulating coating was repeatedly wiped with a cotton swab until the insulating coating fell off. A greater quantity of wiping times with the cotton swab indicates better electrolyte resistance of the insulating coating.

### (5) Adhesion test of insulating coating

Secondary batteries prepared in the examples and comparative examples were charged to 3.65 V at a constant current of 1C at 60°C, and then charged to a current less than or equal to 0.05 mA at a constant voltage of 3.65 V; and after being left standing for 5 minutes, the secondary batteries were discharged to 2.50 V at a constant current of 1C. This was one charge and discharge cycle. After the secondary batteries were tested for 500 charge and discharge cycles in the foregoing method, the secondary batteries were disassembled to observe whether the insulating coating had fallen off from the positive electrode current collector.

### (6) K-value test of secondary battery

After the secondary batteries prepared in the examples and comparative examples were left at room temperature for 48 hours, their open circuit voltage was measured and recorded as OCV1; and then the secondary batteries were left at room temperature for 48 more hours and their open circuit voltage was measured and recorded as OCV2. K value of secondary battery (mV/h)=(OCV1-OCV2)/48.

### (7) High-temperature cycling performance test of secondary battery

Secondary batteries prepared in the examples and comparative examples were charged to 3.65 V at a constant current of 1C at 60°C, and then charged to a current less than or equal to 0.05 mA at a constant voltage of 3.65 V; and after being left standing for 5 minutes, the secondary batteries were discharged to 2.50 V at a constant current of 1C. This was one charge and discharge cycle. The secondary batteries were tested for 500 charge and discharge cycles in the same method, and their capacity retention rates were determined.

Capacity retention rate of secondary battery after 500 cycles at 60°C (%)=discharge capacity at the 500^{th} cycle/discharge capacity at the 1^{st} cycle×100%.

### (8) High-temperature storage performance test of secondary battery

The secondary batteries prepared in the examples and comparative examples were charged to 3.65 V at a constant current of 1/3C at room temperature, then stored at 60°C for 60 days, and left standing at room temperature for 5 hours; and the secondary batteries were discharged to 2.50 V at the constant current of 1/3C, further charged to 3.65 V at a constant current of 1/3C, and then discharged to 2.50 V at a constant current of 1/3C to obtain the discharge capacity of the secondary battery after storage.

Capacity retention rate of secondary battery after storage at 60°C for 60 days (%)=discharge capacity of secondary battery after storage/rated capacity of secondary battery×100%.

Table 2 shows performance test results of Examples 1 to 21 and Comparative Examples 1 to 4.

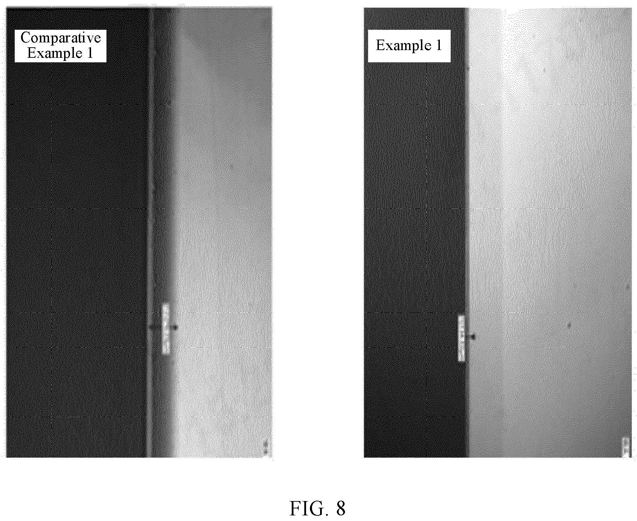

FIG. 8 is a diagram of a comparison between results of applying, at a high velocity, insulating slurries prepared in Example 1 and Comparative Example 1. As shown in FIG. 8, the technical solution of the insulating slurry of this application can effectively reduce a fuzzy width of a fusion region. It could be seen from the test results in Table 2 that a fuzzy width of a fusion region of the insulating slurry prepared in Example 1 at a coating velocity of 60 m/min was only 0.4 mm, while a fuzzy width of a fusion region of the insulating slurry prepared in Comparative Example 1 at a coating velocity of 36 m/min reached 2.2 mm. Therefore, in this application, the polyfluorinated olefin resin prepared by using the suspension polymerization method was combined with the two-dimensional inorganic material for use, which could limit the migration of the insulating slurry to the coating region of the positive electrode slurry and further significantly reduce the fuzzy width of the fusion region while improving a coating velocity.

In Comparative Example 2, polyfluorinated olefin resin prepared by using the suspension polymerization method was combined with a conventional spherical or quasi-spherical inorganic filler boehmite for use, which could reduce the fuzzy width of the fusion region while improving the coating velocity to some extent, but an improvement was limited. The fuzzy width of the fusion region of the insulating slurry reached 1.0 mm at a coating velocity of 45 m/min. Therefore, the insulating slurry prepared in Comparative Example 2 was difficult to use at a coating velocity above 60 m/min. In Comparative Example 3, polyfluorinated olefin resin prepared by using the emulsion polymerization method was combined with a two-dimensional inorganic material for use, which could also reduce the fuzzy width of the fusion region while improving the coating velocity to some extent, but an improvement was also limited. The fuzzy width of the fusion region of the insulating slurry reached 1.5 mm at a coating velocity of 36 m/min. Therefore, the insulating slurry prepared in Comparative Example 3 was also difficult to use at a coating velocity above 60 m/min. In Comparative Example 4, during preparation of insulating slurry, the resin was added before the inorganic filler, and as a result, the inorganic filler could not be uniformly dispersed.

It could also be seen from the test results in Table 2 that when mass percentages of the resin, the inorganic filler, and the organic solvent were properly adjusted to satisfy that w1 was 1%-5%, w2 was 5%-35%, and w3 was 60%-94%, the fuzzy width of the fusion region of the positive electrode plate could be further reduced. In addition, on this basis, when a mass ratio of the resin and the inorganic filler was further properly adjusted to control w1/w2 between 0.1 and 1, the insulating coating could have higher adhesion and electrolyte resistance.

It could also be seen from the test results of Example 1 and Examples 19 to 21 that a greater diameter-thickness ratio of the two-dimensional inorganic material led to more significant effect of reducing the migration velocity of the insulating slurry and a smaller fuzzy width of the fusion region of the positive electrode plate.
It should be noted that this application is not limited to the foregoing embodiments. The foregoing embodiments are merely examples, and embodiments having constructions substantially the same as those of the technical idea and having the same effects as the technical idea within the scope of the technical solution of this application are all included in the technical scope of this application.

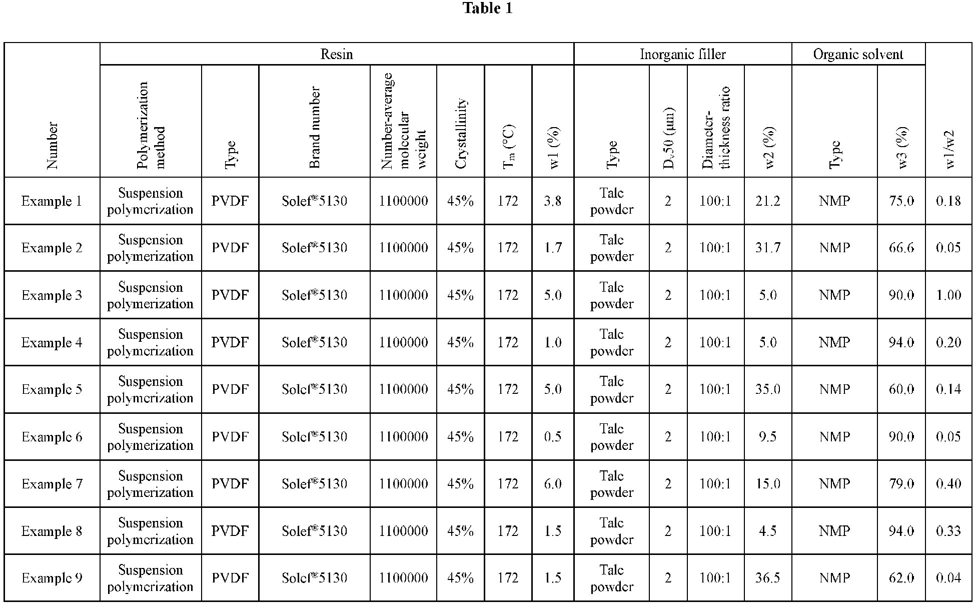

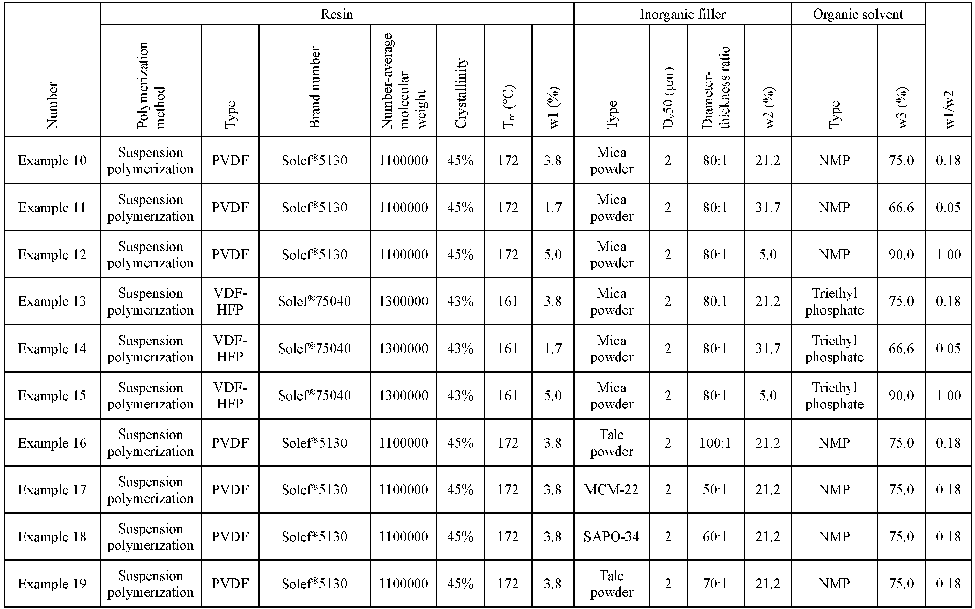

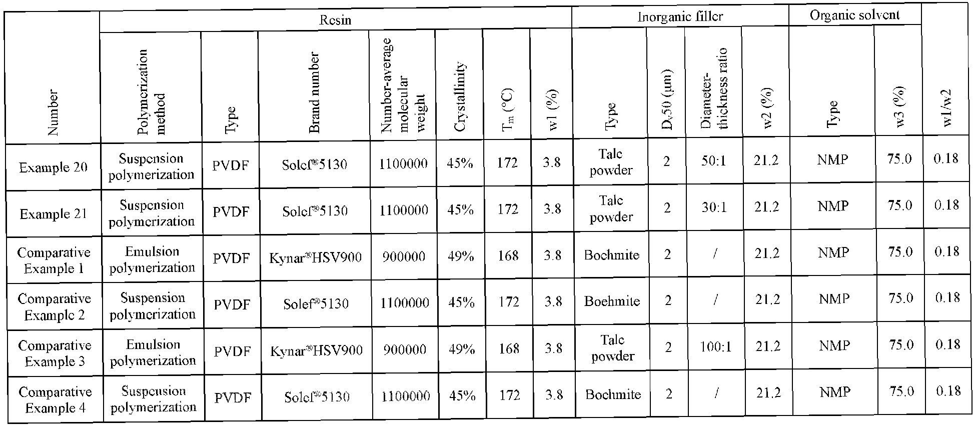

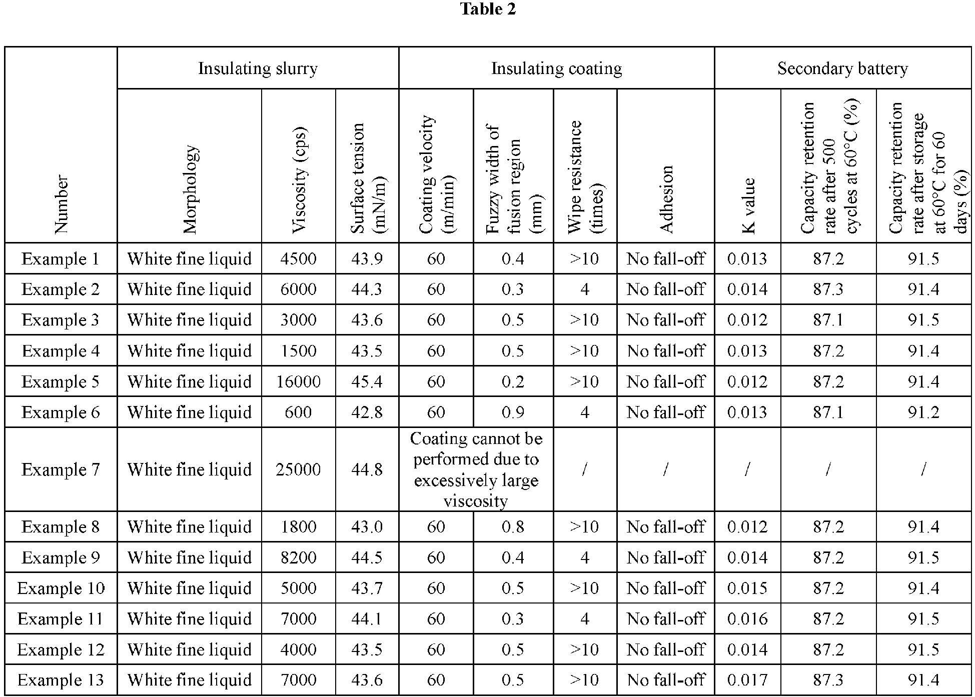

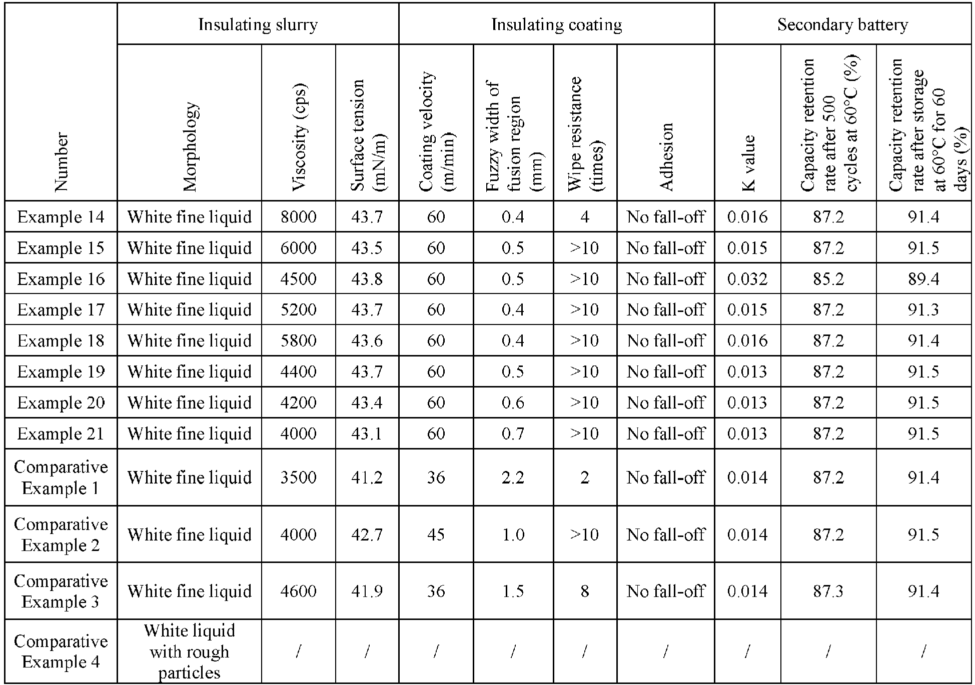

## Claims

1. A positive electrode plate, comprising:
a positive electrode current collector;
a positive electrode active material layer, located on at least part of a surface of the positive electrode current collector; and
an insulating coating, located on the surface of the positive electrode current collector and abutting an edge of the positive electrode active material layer along a length direction of the positive electrode current collector, wherein
the insulating coating is a layer formed by drying an insulating slurry, the insulating slurry comprising resin, an inorganic filler, and an organic solvent, wherein the resin is selected from polyfluorinated olefin resin prepared by using a suspension polymerization method, and the inorganic filler is selected from two-dimensional inorganic materials; and optionally, the two-dimensional inorganic material has layered, flake-like, or thin plate-like morphology.

2. The positive electrode plate according to claim 1, wherein based on a total mass of the insulating slurry, a mass percentage w1 of the resin is 1%-5%, a mass percentage w2 of the inorganic filler is 5%-35%, and a mass percentage w3 of the organic solvent is 60%-94%; and optionally, w1/w2 is 0.05-1, and optionally, 0.1-1; and/or viscosity of the insulating slurry at 25°C is 1 Ps - 20 Ps (1000-20000 cps), and optionally, 3 Ps - 8 (3000-8000 cps), measured as set out in the description.

3. The positive electrode plate according to claim 1 or claim 2, wherein number-average molecular weight of the polyfluorinated olefin resin is 600000-1500000, and
optionally, 1100000- 1300000;
crystallinity of the polyfluorinated olefin resin is 30%-60%, and optionally, 40%-50%; and/or
a melting point of the polyfluorinated olefin resin is 150-180°C, and optionally, 155-175°C;
optionally the polyfluorinated olefin resin is selected from at least one of polyvinylidene fluoride resin, polyvinyl fluoride resin, polytetrafluoroethylene resin, vinylidene fluoride-hexafluoropropylene copolymer resin, vinylidene fluoride-trifluoroethylene copolymer resin, vinylidene fluoride-chlorotrifluoroethylene copolymer resin, vinylidene fluoride-tetrafluoroethylene copolymer resin, and vinylidene fluoride-tetrafluoroethylene-hexafluoropropylene copolymer resin, measured as set out in the description.

4. The positive electrode plate according to claims 1 to 3, wherein the two-dimensional inorganic material is selected from at least one of layered silicate and a two-dimensional molecular sieve;
optionally, the layered silicate comprises at least one of mica powder, fluorophlogopite powder, talc powder, hydrotalcite, and a hydrotalcite-like compound; and
optionally, the two-dimensional molecular sieve comprises at least one of an MWW-type, an SAPO-type, an FER- type, and a PLS-n-type molecular sieve.

5. The positive electrode plate according to claims 1 to 4, wherein a median particle size by volume Dv50 of the two-dimensional inorganic material is 0.5-10 µm, and optionally, 0.5- 5 µm, and/or
a diameter-thickness ratio of the two-dimensional inorganic material is greater than or equal to 50:1, and optionally, is 50:1 - 100:1, measured as described in the description.

6. The positive electrode plate according to claims 1 to 5-, wherein the organic solvent comprises at least one of N-methylpyrrolidone, triethyl phosphate, dimethyl sulfoxide, N,N-dimethylformamide, and N,N-dimethylacetamide, and/or a mass percentage of an emulsifier in the insulating slurry is less than or equal to 1/1000000, and optionally, the mass percentage of the emulsifier in the insulating slurry is 0%.

7. The positive electrode plate according to any one of claims 1 to 6,wherein a thickness of the insulating coating is 2-150 µm; and/or
a width of the insulating coating is 0.1-15 mm.

8. A secondary battery (5), comprising the positive electrode plate according to any one of claims 1 to 7.

9. A battery module (4), comprising the secondary battery (5) according to claim8.

10. A battery pack (1), comprising the secondary battery (5) according to claim 8 or the battery module (4) according to claim 9.

11. An electric apparatus, comprising at least one of the secondary battery (5) according to claim 8, the battery module (4) according to claim 9, and the battery pack (1) according to claim 10.

## Patentansprüche

1. Positive Elektrodenplatte, umfassend:
einen positiven Elektroden-Stromsammler;
eine positive Elektroden-Aktivmaterialschicht, die auf zumindest einem Teil einer Oberfläche des positiven Elektroden-Stromsammlers angeordnet ist; und
eine Isolierbeschichtung, die auf der Oberfläche des positiven Elektroden-Stromsammlers und an einer Kante der positiven Elektroden-Aktivmaterialschicht entlang einer Längsrichtung des positiven Elektroden-Stromsammlers anliegend angeordnet ist, wobei
die Isolierbeschichtung eine durch Trocknen eines Isolierschlickers gebildete Schicht ist, wobei der Isolierschlicker Harz, einen anorganischen Füllstoff und ein organisches Lösungsmittel umfasst, wobei das Harz ausgewählt ist aus einem polyfluorierten Olefinharz, hergestellt unter Verwendung eines Suspensionspolymerisationsverfahrens, und der anorganische Füllstoff ausgewählt ist aus zweidimensionalen anorganischen Materialien; und
optional das zweidimensionale anorganische Material eine geschichtete, plättchenartige oder dünnplattenartige Morphologie aufweist.

2. Positive Elektrodenplatte nach Anspruch 1, wobei bezogen auf eine Gesamtmasse des Isolierschlickers ein Massenanteil w1 des Harzes 1 %-5 %, ein Massenanteil w2 des anorganischen Füllstoffs 5 %-35 % und ein Massenanteil w3 des organischen Lösungsmittels 60 % - 94 % beträgt; und optional w1/w2 0,05 - 1, und optional 0,1 - 1 ist; und/oder
die Viskosität des Isolierschlickers bei 25 °C 1 Ps - 20 Ps (1000 - 20000 cps), und optional 3 Ps - 8 Ps (3000-8000 cps), gemessen wie in der Beschreibung dargelegt, beträgt.

3. Positive Elektrodenplatte nach Anspruch 1 oder Anspruch 2, wobei das ZahlenmittelMolekulargewicht des polyfluorierten Olefinharzes 600000-1500000, und optional 1100000-1300000 beträgt;
die Kristallinität des polyfluorierten Olefinharzes 30 %-60 %, und optional 40 %-50 % beträgt; und/oder der Schmelzpunkt des polyfluorierten Olefinharzes 150-180 °C, und optional 155-175 °C beträgt;
optional das polyfluorierte Olefinharz ausgewählt aus zumindest einem von Polyvinylidenfluoridharz, Polyvinylfluoridharz, Polytetrafluorethylenharz, Vinylidenfluorid-Hexafluorpropylen-Copolymerharz, Vinylidenfluorid-Trifluorethylen-Copolymerharz, Vinylidenfluorid-Chlortrifluorethylen-Copolymerharz, Vinylidenfluorid-Tetrafluorethylen-Copolymerharz und Vinylidenfluorid-Tetrafluorethylen-Hexafluorpropylen-Copolymerharz, gemessen wie in der Beschreibung dargelegt ist.

4. Positive Elektrodenplatte nach einem der Ansprüche 1 bis 3, wobei das zweidimensionale anorganische Material ausgewählt ist aus zumindest einem von geschichtetem Silikat und einem zweidimensionalen Molekularsieb;
optional umfasst das geschichtete Silikat zumindest eines von Glimmerpulver, Fluorphlogopitpulver, Talkumpulver, Hydrotalcit und einer hydrotalcitähnlichen Verbindung; und
optional das zweidimensionale Molekularsieb zumindest eines von einem Molekularsieb vom MWW-Typ, vom SAPO-Typ, vom FER-Typ und vom PLS-n-Typ umfasst.

5. Positive Elektrodenplatte nach einem der Ansprüche 1 bis 4, wobei eine mediane Partikelgröße nach Volumen Dv50 des zweidimensionalen anorganischen Materials 0,5-10 µm, und optional 0,5 - 5 µm beträgt; und/oder
ein Durchmesser-Dicken-Verhältnis des zweidimensionalen anorganischen Materials größer oder gleich 50:1 ist, und optional 50:1 - 100:1 beträgt, gemessen wie in der Beschreibung beschrieben.

6. Positive Elektrodenplatte nach einem der Ansprüche 1 bis 5, wobei das organische Lösungsmittel zumindest eines von N-Methylpyrrolidon, Triethylphosphat, Dimethylsulfoxid, N,N-Dimethylformamid und N,N-Dimethylacetamid umfasst; und/oder ein Massenanteil eines Emulgators im Isolierschlicker kleiner oder gleich 1/1000000 ist, und optional beträgt der Massenanteil des Emulgators im Isolierschlicker 0 %.

7. Positive Elektrodenplatte nach einem der Ansprüche 1 bis 6, wobei eine Dicke der Isolierbeschichtung 2 - 150 µm beträgt; und/oder
eine Breite der Isolierbeschichtung 0,1 - 15 mm beträgt.

8. Sekundärbatterie (5), umfassend die positive Elektrodenplatte nach einem der Ansprüche 1 bis 7.

9. Batteriemodul (4), umfassend die Sekundärbatterie (5) nach Anspruch 8.

10. Batteriepack (1), umfassend die Sekundärbatterie (5) nach Anspruch 8 oder das Batteriemodul (4) nach Anspruch 9.

11. Elektrisches Gerät, umfassend eine Sekundärbatterie (5) nach Anspruch 8, und/oder ein Batteriemodul (4) nach Anspruch 9, und/oder den Batteriepack (1) nach Anspruch 10.

## Revendications

1. Plaque d'électrode positive, comprenant :
un collecteur de courant d'électrode positive ;
une couche de matériau actif d'électrode positive, disposée sur au moins une partie d'une surface du collecteur de courant d'électrode positive ; et
un revêtement isolant, disposé sur la surface du collecteur de courant d'électrode positive et venant en appui contre un bord de la couche de matériau actif d'électrode positive le long d'une direction longitudinale du collecteur de courant d'électrode positive, dans laquelle
le revêtement isolant est une couche formée par séchage d'une boue isolante, la boue isolante comprenant une résine, une charge inorganique et un solvant organique, dans laquelle la résine est sélectionnée parmi les résines d'oléfine polyfluorée préparées par un procédé de polymérisation en suspension, et la charge inorganique est sélectionnée parmi des matériaux inorganiques bidimensionnels ; et
optionnellement, le matériau inorganique bidimensionnel présente une morphologie stratifiée, en flocons ou en plaques minces.

2. Plaque d'électrode positive selon la revendication 1, dans laquelle, sur la base de la masse totale de la boue isolante, un pourcentage massique w1 de la résine est de 1 % à 5 %, un pourcentage massique w2 de la charge inorganique est de 5 % à 35 %, et un pourcentage massique w3 du solvant organique est de 60 % à 94 % ; et optionnellement, w1/w2 est de 0,05 à 1, et optionnellement de 0,1 à 1 ; et/ou
la viscosité de la boue isolante à 25 °C est de 1 Ps à 20 Ps (1000 - 20000 cps), et optionnellement de 3 Ps à 8 Ps (3000 - 8000 cps), mesurée comme indiqué dans la description.

3. Plaque d'électrode positive selon la revendication 1 ou 2, dans laquelle la masse moléculaire moyenne en nombre de la résine d'oléfine polyfluorée est de 600000 à 1500000, et optionnellement de 1100000 à 1300000 ;
la cristallinité de la résine d'oléfine polyfluorée est de 30 % à 60 %, et optionnellement de 40 % à 50 % ; et/ou le point de fusion de la résine d'oléfine polyfluorée est de 150 à 180 °C, et optionnellement de 155 à 175 °C ;
optionnellement, la résine d'oléfine polyfluorée est sélectionnée parmi au moins l'une des résines suivantes : résine de fluorure de polyvinylidène, résine de fluorure de polyvinyle, résine de polytétrafluoroéthylène, résine copolymère fluorure de vinylidène-hexafluoropropylène, résine copolymère fluorure de vinylidène-trifluoroéthylène, résine copolymère fluorure de vinylidène-chlorotrifluoroéthylène, résine copolymère fluorure de vinylidène-tétrafluoroéthylène et résine copolymère fluorure de vinylidène-tétrafluoroéthylène-hexafluoropropylène, mesurée comme indiqué dans la description.

4. Plaque d'électrode positive selon l'une quelconque des revendications 1 à 3, dans laquelle le matériau inorganique bidimensionnel est sélectionné parmi au moins un silicate stratifié et un tamis moléculaire bidimensionnel ;
optionnellement, le silicate stratifié comprend au moins l'un des éléments suivants : poudre de mica, poudre de fluorophlogopite, poudre de talc, hydrotalcite et un composé de type hydrotalcite ; et
optionnellement, le tamis moléculaire bidimensionnel comprend au moins un tamis moléculaire de type MWW, de type SAPO, de type FER et de type PLS-n.

5. Plaque d'électrode positive selon l'une quelconque des revendications 1 à 4, dans laquelle une taille médiane des particules en volume Dv50 du matériau inorganique bidimensionnel est de 0,5 à 10 µm, et optionnellement de 0,5 à 5 µm ; et/ou
un rapport diamètre/épaisseur du matériau inorganique bidimensionnel est supérieur ou égal à 50:1, et optionnellement de 50:1 à 100:1, mesuré comme décrit dans la description.

6. Plaque d'électrode positive selon l'une quelconque des revendications 1 à 5, dans laquelle le solvant organique comprend au moins l'un des éléments suivants : N-méthylpyrrolidone, phosphate de triéthyle, diméthylsulfoxyde, N,N-diméthylformamide et N,N-diméthylacétamide ; et/ou un pourcentage massique d'un émulsifiant dans la boue isolante est inférieur ou égal à 1/1000000, et optionnellement le pourcentage massique de l'émulsifiant dans la boue isolante est de 0 %.

7. Plaque d'électrode positive selon l'une quelconque des revendications 1 à 6, dans laquelle une épaisseur du revêtement isolant est de 2 à 150 µm ; et/ou
une largeur du revêtement isolant est de 0,1 à 15 mm.

8. Batterie secondaire (5), comprenant la plaque d'électrode positive selon l'une quelconque des revendications 1 à 7.

9. Module de batterie (4), comprenant la batterie secondaire (5) selon la revendication 8.

10. Bloc-batterie (1), comprenant la batterie secondaire (5) selon la revendication 8 ou le module de batterie (4) selon la revendication 9.

11. Appareil électrique, comprenant au moins l'un des éléments suivants : la batterie secondaire (5) selon la revendication 8, le module de batterie (4) selon la revendication 9 et le bloc-batterie (1) selon la revendication 10.
